# EUROPEAN PATENT APPLICATION

(11) **EP 4 826 682 A1**
(43) Date of publication of application: **21.10.2026**
(21) Application number: 26172434.8
(22) Date of filing: 15.04.2026
(51) Int. Cl.: G06V 20/69, G06V 10/82

(54) **MULTI-TARGET QUANTITATIVE ANALYSIS METHOD AND SYSTEM BASED ON GOLD NANOPARTICLE LABELLING-SILVER STAINING IMAGING AND ARTIFICIAL INTELLIGENCE-ASSISTED BIOLOGICAL IMAGE RECOGNITION**

(30) Priority: 15.04.2025 HK 32025106059
(71) Applicant: Hai Kang Life Corporation Limited, Shatin, N.T. (HK)
(72) Inventor: YU, Cheung Hoi, Shatin, N.T. (HK)
(74) Representative: Cabinet Chaillot

(57) **Abstract**

A multi-target quantitative analysis method and system based on gold nanoparticle labelling-silver staining imaging and artificial intelligence-assisted biological image recognition are disclosed. The method performs hybridization and gold nanoparticle-silver staining enhancement reactions on a gene chip to form visible silver-stained particle signals; collects optical microscopic images; utilizes a cascaded deep learning model to perform microwell localization and pixel-level semantic segmentation to extract a binarized mask; and converts the pixel area of the mask into the physical quantity of silver-stained particles based on a preconstructed conversion model calibrated by Scanning Electron Microscope (SEM) images. The conversion model corrects counting errors caused by the optical diffraction limit and particle stacking. The invention achieves high-sensitivity absolute quantitative analysis in POCT scenarios with advantages of low cost, high throughput, and strong anti-interference capability.

## Description

### CROSS-REFERENCE TO RELATED APPLICATIONS

This application claims priority under 35 U.S.C. § 119 to Hong Kong Patent Application No. 32025106059.8, filed on April 15, 2025, the entire contents of which are incorporated herein by reference.

### STATEMENT REGARDING FEDERALLY SPONSORED RESEARCH OR DEVELOPMENT

### JOINT RESEARCH AGREEMENT

### FIELD OF THE INVENTION

The present invention relates to the fields of biomedical detection and artificial intelligence, and specifically relates to a multi-target quantitative analysis method and system based on gold nanoparticle labelling-silver staining imaging and artificial intelligence-assisted biological image recognition.

### BACKGROUND OF THE INVENTION

With the rapid development of precision medicine, molecular diagnostic technology has become a core tool for early disease screening, disease progression monitoring, and prognosis assessment. Traditional molecular diagnostics rely on large-scale instruments and complex workflows in centralized laboratories, which suffer from long sample turnaround times and high testing costs, making it difficult to meet the urgent demand for Point-of-Care Testing (POCT) in emergency care and primary healthcare settings. Furthermore, disease progression is a dynamic process involving pathogen mutation, the acquisition of drug-resistance genes, and changes in host immune responses. Therefore, achieving simultaneous detection and precise quantitative analysis of multiple targets is of decisive significance for real-time monitoring of disease evolution.

Currently, the mainstream technologies for multi-target quantitative analysis of nucleic acids primarily include real-time quantitative PCR (qPCR), digital PCR (dPCR), and gene chip technology. However, these technologies exhibit significant endogenous deficiencies when applied to POCT scenarios:
1. qPCR and dPCR Technologies: Limited by the number of optical channels and spectral crosstalk between fluorescent dyes, a single-tube reaction typically only achieves 3-5plex target detection, which fails to meet high-throughput screening requirements. Additionally, dPCR instruments are costly, and droplet generation and reading rely on precision microfluidic systems, making them difficult to popularize.
2. Traditional Fluorescent Gene Chips: Although high-throughput issues are addressed, fluorescent dyes have an inherent photobleaching effect where signals decay over time, affecting quantitative accuracy. Furthermore, fluorescent signal acquisition depends on expensive laser confocal scanners, lacking portability.

The disclosure of the above background information is only intended to assist in understanding the concept and technical solutions of the present application and does not necessarily provide technical guidance.

### SUMMARY OF THE INVENTION

The objective of the present invention is to provide a method and system for high-sensitivity absolute quantitative analysis of multiple nucleic acid targets by utilizing gold nanoparticle labelling-silver staining enhancement for biochemical signal amplification, combined with cascading deep learning algorithms for super-resolution recognition of microscopic images. This solution addresses current challenges in silver staining detection, such as the difficulty of quantification, poor target differentiation, and low manual interpretation efficiency.

A multi-target quantitative analysis method based on gold nanoparticle labelling-silver staining imaging and artificial intelligence-assisted biological image recognition comprises the following steps:
contacting a nucleic acid sample to be tested with a gene chip to perform a hybridization reaction, utilizing gold nanoparticle-labelled detection probes to bind with target nucleic acids, and performing a silver staining enhancement reaction to form visible silver-stained particle signals on the surface of said gene chip;
capturing microscopic images of the gene chip after the reaction using an optical imaging device;
performing target detection on said microscopic images using a first deep learning model to identify reaction microwell regions of the gene chip and extracting Region of Interest (ROI) images corresponding to said reaction microwell regions;
performing pixel-level resolution recognition and semantic segmentation on said ROI images using a second deep learning model, and generating a binarized mask to identify the distribution of silver-stained particles; and
calculating the number of silver-stained particles in said binarized mask based on a pre-constructed conversion model, wherein the construction of said conversion model is based on a mapping relationship between the physical area of a single silver-stained particle obtained from benchmark imaging statistics and its pixel area in the microscopic image.

Further features of the method, system, and computer-readable storage medium are set forth in the claims and detailed description below. The technical solution yields the following beneficial effects:
a. Accurate Quasi-Absolute Quantification: By utilizing AI image analysis algorithms instead of traditional optical density analysis, the system achieves quasi-absolute quantification based on "particle counting." This effectively resolves signal saturation issues caused by non-linear silver staining amplification, significantly enhancing quantitative accuracy.
b. High Stability and Low Cost: The system employs silver staining signals with excellent physical stability (>30 days) instead of fluorescent labels. This eliminates photobleaching interference and the need for expensive scanners, allowing for parallel detection of dozens to hundreds of targets using a standard optical microscope.
c. Dynamic Range Expansion: To address silver particle agglomeration, the invention introduces a calibration model based on electron microscopy data. This enables precise separation of overlapping signals, remarkably broadening the detection's dynamic range.
d. High Throughput: By combining high-density probe chips with AI-driven super-resolution image analysis, the system achieves parallel detection of dozens to hundreds of targets, breaking through the physical limitations of multicolour fluorescent labelling.

### BRIEF DESCRIPTION OF THE DRAWINGS

FIG. 1 is a schematic diagram of the chip hybridization reaction principle and signal amplification mechanism based on gold nanoparticle-silver staining enhancement technology in an embodiment of the present invention.
FIG. 2 is a logical flowchart of AI-assisted biological image recognition and quantitative analysis in an embodiment of the present invention.
FIG. 3 is a low-magnification panoramic optical scanned image collected after gene chip hybridization and silver staining colour development in an embodiment of the present invention.
FIG. 4 is a high-magnification optical microscopic image of a local microwell region of the chip shown in FIG. 3 in an embodiment of the present invention.
FIG. 5 is a single microwell Region of Interest (ROI) image identified and extracted by the target detection module of the AI model in an embodiment of the present invention.
FIG. 6 is a binarized mask (Binary Mask) output after processing by the semantic segmentation module of the AI model in an embodiment of the present invention.
FIG. 7 is a Scanning Electron Microscope (SEM) image of a corresponding microwell collected to establish a counting calibration model in an embodiment of the present invention.
FIG. 8 is a schematic flowchart of the multi-target quantitative analysis method based on gold nanoparticle labelling-silver staining imaging and AI-assisted biological image recognition provided in an embodiment.
FIG. 9 is a block diagram of the multi-target quantitative analysis system based on gold nanoparticle labelling-silver staining imaging and Al-assisted biological image recognition provided in an exemplary embodiment of the present invention.

### DETAILED DESCRIPTION OF THE INVENTION

To enable those skilled in the art to better understand the solutions of the present invention, the technical solutions in the embodiments of the present invention will be described clearly and completely below in conjunction with the accompanying drawings. It is evident that the described embodiments are merely a part of the embodiments of the present invention, rather than all of them. All other embodiments obtained by those of ordinary skill in the art based on the embodiments in the present invention without creative effort shall fall within the scope of protection of the present invention.

It should be noted that terms such as "first" and "second" in the specification, claims, and the aforementioned drawings of the present invention are used to distinguish similar objects and are not necessarily used to describe a specific order or sequence. It should be understood that data used in this way may be interchanged under appropriate circumstances so that the embodiments of the present invention described herein can be implemented in orders other than those illustrated or described herein. Furthermore, the terms "comprising," "including," and "having," as well as any variations thereof, are intended to cover non-exclusive inclusion. For example, a process, method, system, product, or device that includes a series of steps or units is not necessarily limited to those steps or units clearly listed, but may include other steps or units not clearly listed or inherent to such processes, methods, products, or devices.

To solve the endogenous deficiencies of applying PCR technology in POCT scenarios, gold nanoparticle-silver staining enhancement technology has been introduced into the field of gene chips. This technology utilizes gold nanoparticles to catalyze the deposition of silver ions, forming stable signals that are optically visible without the need for expensive optical equipment. However, existing gold nanoparticle-silver staining technologies face insurmountable technical bottlenecks in quantitative analysis: non-linearity and agglomeration, limitations of manual interpretation, and incompatibility of existing AI.

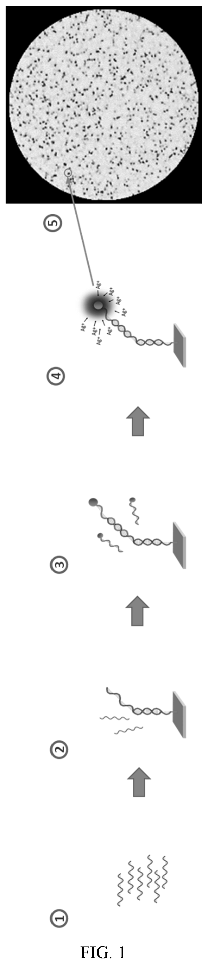

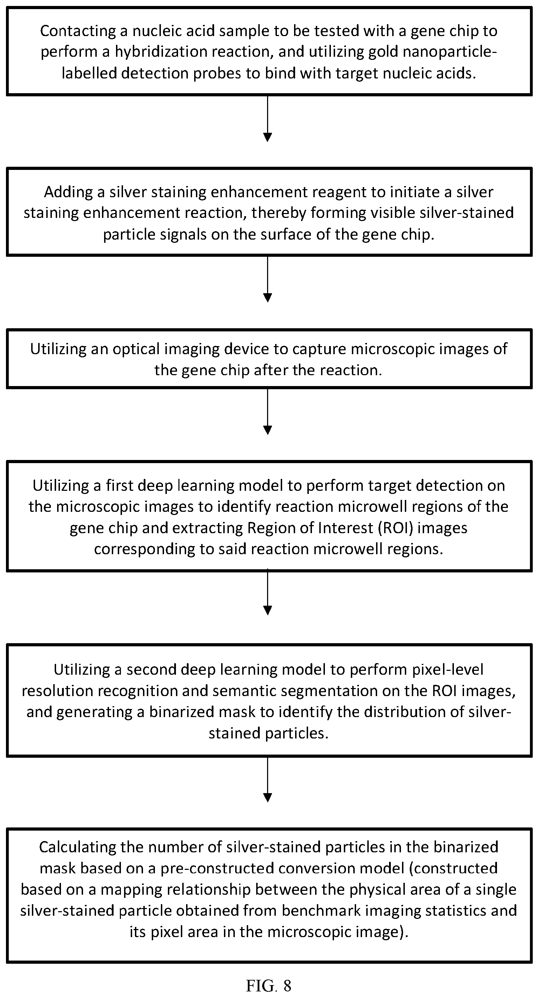

In one embodiment of the present invention, there is provided a multi-target quantitative analysis method based on gold nanoparticle labelling-silver staining imaging and artificial intelligence-assisted biological image recognition. As shown in FIG. 8, the method comprises the following steps:
**S100:** As shown in FIG. 1, contacting a nucleic acid sample to be tested with a gene chip to perform a hybridization reaction, utilizing gold nanoparticle-labelled detection probes to bind with target nucleic acids, and performing silver staining enhancement treatment (adding a silver staining enhancement reagent to initiate the silver staining enhancement reaction), thereby forming visible silver-stained particle signals on the surface of said gene chip.

Specifically, the gene chip comprises an aldehyde-modified solid-phase substrate and specific capture detection probes spotted on the surface of said solid-phase substrate. A probe array containing a plurality of microwells or sites is constructed on the surface of the solid-phase carrier, with each site having a capture probe immobilized for a specific target. The target sample nucleic acids are mixed with detection probes labelled with gold nanoparticles (AuNPs) and added to the chip surface.

The hybridization process on the gene chip involves the capture of nucleic acids (① in FIG. 1) by specific probes on the chip ② in FIG. 1). Detection probes coupled with gold nanoparticles specifically bind to the captured targets, forming a "capture probe-target-gold nanoparticle detection probe" sandwich complex (③ in FIG. 1). The sample nucleic acids may be preprocessed via symmetric barcode PCR amplification and Lambda exonuclease digestion to generate high-purity single-stranded DNA, thereby enhancing hybridization efficiency.

After adding a silver staining enhancement reagent to the surface of the hybridized chip, the gold nanoparticles in the sandwich complex serve as catalytic cores to reduce silver ions in the reagent. The reduced silver is deposited to encapsulate the gold nanoparticle surfaces of the detection probes after the hybridization reaction, achieving signal amplification (④ in FIG. 1) and forming hybridization signals-silver-stained particle signals (⑤ in FIG. 1)-that can be directly observed under high-magnification microscope. The colour development time is controlled to ensure that the size of the silver-stained particles remains within a preset optical resolution range.

**S200:** Utilizing an optical imaging device to capture microscopic images of said gene chip after the reaction.

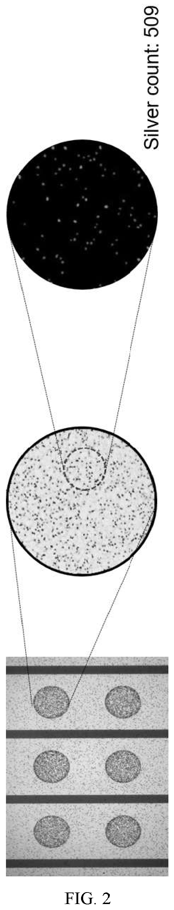

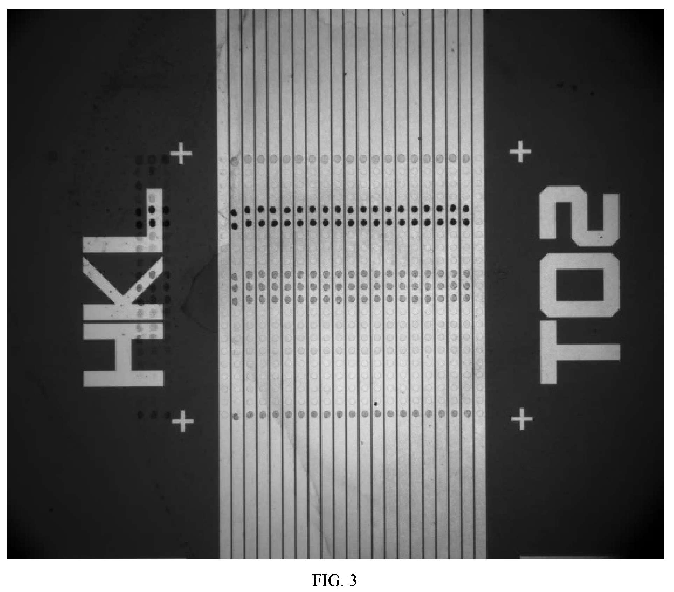

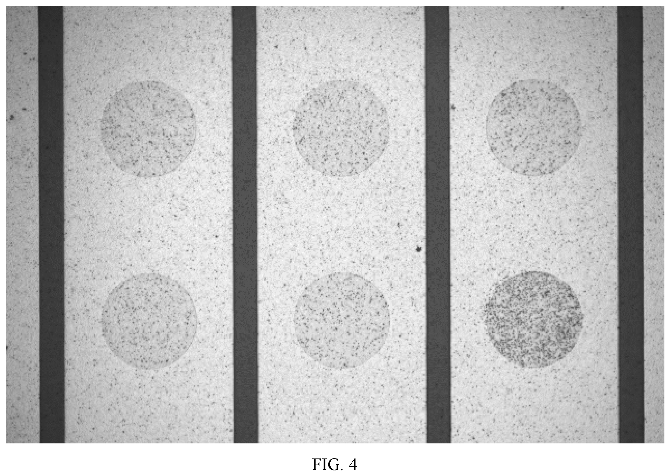

As shown in the left portion of FIG. 2, the microscopic images display several reaction microwell regions and the areas between adjacent microwells. In one specific embodiment, the optical imaging device is a bright-field optical microscope or a scanner based on a CMOS or CCD sensor. The microscopic images collected may be greyscale images (as shown in FIG. 3) or RGB colour images. High-magnification microscopic imaging of a local area of the chip yields a greyscale image as shown in FIG. 4.

**S300:** Utilizing a first deep learning model to perform target detection on said microscopic images to identify reaction microwell regions of the gene chip and extracting Region of Interest (ROI) images corresponding to said reaction microwell regions.

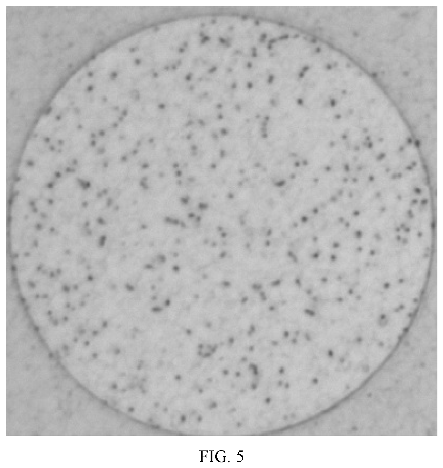

As shown in the middle portion of FIG. 2, an ROI image corresponding to a specific reaction microwell region is extracted (FIG. 5). The first deep learning model is a target detection network selected from YOLO or SSD. Taking YOLO as an example, it is trained by:
S301: Obtaining microscopic images at different positions and/or under different reaction intensities, using an annotation tool to draw bounding boxes for reaction microwell regions in each microscopic image as labels, and partitioning the data into a training set, a validation set, and a test set according to a specific ratio.

S302: Inputting the training images and corresponding labels into the YOLO model to calculate a loss value between network predicted values and the labels; utilizing a backpropagation algorithm to calculate gradients of a loss function relative to weights of each layer of the network, and using a gradient descent method to optimize the weight parameters of the network. S303: Iterating the cycle until the losses of the YOLO model on both the training set and the validation set converge to a preset loss threshold.

S304: Evaluating the generalization performance of the YOLO model using the test set; if the evaluation is passed, the training is completed; otherwise, diagnosing performance differences and returning to a new round of cyclic training.

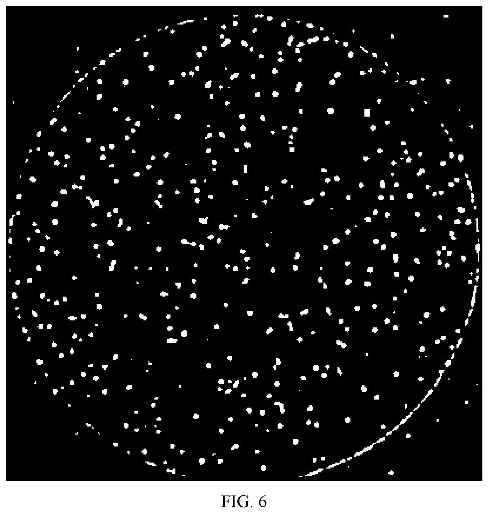

**S400:** Utilizing a second deep learning model to perform pixel-level resolution recognition and semantic segmentation on said ROI images, and generating a binarized mask to identify the distribution of silver-stained particles (FIG. 6); specifically as shown in FIG. 6, where white regions represent silver-stained particle coverage areas, referred to as connected pixel clusters representing silver-stained particles.

The second deep learning model is a semantic segmentation network selected from UNet or SegNet. Taking UNet as an example, it is trained by:
S401: Obtaining ROI images targeting reaction microwells, using an annotation tool to outline the edges of silver-stained particles in each ROI image, and generating a binarized mask label map corresponding to said ROI image, wherein pixel values of an inner region of the outlined edges are 1 and remaining regions are 0. The edges of the silver-stained particles are determined as follows: collecting optical microscopic images and Scanning Electron Microscope (SEM) images for a same position region of a same chip; performing spatial registration between said SEM images and the optical microscopic images; and performing pixel-level annotation on said optical microscopic images by using physical particles identified in said SEM images as ground truth to obtain a binarized mask label map.

S402: Scaling said ROI images and binarized mask label maps to a designated size adapted for UNet down sampling, and normalizing pixel values of said ROI images from [0, 255] to [0, 1] to obtain standardized sample images.

S403: Configuring a final layer of the UNet network to use a 1×1 convolution kernel and a Sigmoid activation function to output a probability map of each pixel belonging to a silver-stained particle.

S404: Selecting a Dice Loss function and a Binary Cross-Entropy (BCE) Loss function to calculate a weighted loss during iterative training of the model, and utilizing an Adam optimizer to minimize the loss to update network weights until the performance of the network model on an independent validation set converges.

**S500:** Calculating the number of silver-stained particles in said binarized mask based on a pre-constructed conversion model. The construction of said conversion model is based on a mapping relationship between the physical area of a single silver-stained particle obtained from benchmark imaging statistics and its pixel area in the microscopic image. The conversion model is constructed based on the average pixel area and distribution patterns of single silver-stained particles under an optical microscope obtained via SEM image statistics, used to correct for diffraction magnification and particle stacking effects in optical imaging.

The specific method for calculating the number of silver-stained particles in the binarized mask is as follows:
Defining pixel clusters of silver-stained particles in the binarized mask to form a plurality of target connected domains, and presetting a pixel area lower limit *A_{low}* and a pixel area upper limit *A_{high}* consistent with the growth characteristics of the silver-stained particles;
Traversing each target connected domain in the binarized mask by:
   Determining a pixel area A of each target connected domain;
   If *A* < *A_{low},* determining that the silver-stained particle count corresponding to the target connected domain is 0;
   If *A_{low}* ≤ *A* ≤ *A_{high},* determining that the silver-stained particle count corresponding to the target connected domain is 1;
   If *A* > *A_{high},* determining that the silver-stained particle count corresponding to the target connected domain is $Round \left(\frac{A}{{A}_{avg}}\right)$, wherein *Round* ( ) is a rounding function, and *A_{avg}* is the average pixel area of a single silver-stained particle in the microscopic image determined based on the conversion model.

In one specific embodiment, the conversion model is as follows: ${A}_{avg} = {S}_{SEM} \times {R}_{exp} \times {R}_{rel}^{2}$ Wherein:
*A_{avg}* represents the average pixel area of a single silver-stained particle in the microscopic image;
*S_{SEM}* represents the actually measured average physical area of the silver-stained particles;
*Rₑₓₚ* represents a pseudo-magnification ratio under optical imaging; and
${R}_{rel}^{2}$ represents a proportional coefficient correlating the pixel area of the reaction microwell in the microscopic image with its physical area, the calculation formula of which is: ${R}_{rel}^{2} = {\left[\frac{Microwell diameter \left(pixels\right)}{microwell diameter \left(μm\right)}\right]}^{2}$

The pixel area lower limit *A_{low}* and the pixel area upper limit *A_{hiqh}* are set based on the average pixel area *A_{avg}* of a single silver-stained particle in the microscopic image as follows: ${A}_{low} = {A}_{avg} - {A}_{avg} \times \left(\frac{σ}{{S}_{SEM}}\right)$ ${A}_{high} = {A}_{avg} + k \times {A}_{avg} \times \left(\frac{σ}{{S}_{SEM}}\right)$

Wherein *σ* represents the standard deviation of the physical area of the silver-stained particles, *S_{SEM}* represents the average physical area of the silver-stained particles, *k* is a fluctuation coefficient with a value ranging from 1.1 to 1.8, and experiments have shown that a value of 1.5 yields optimal results.

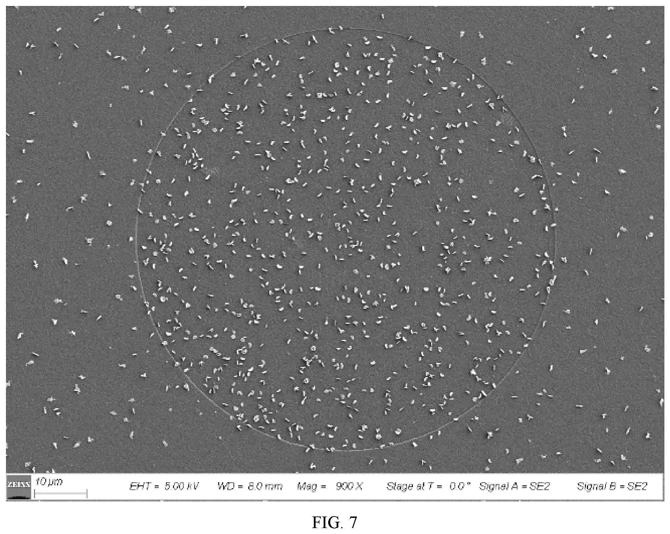

Said average physical area of the silver-stained particles is determined by:
Imaging the gene chip or the reaction microwells after the silver staining enhancement reaction using a Scanning Electron Microscope (SEM) to obtain an SEM image (referred to as an electron micrograph) as shown in FIG. 7, and measuring the physical areas of individual silver-stained particles as [*a*₁, *a*₂, *a*₃, ..., *aₙ*], where *n* is the number of silver-stained particles in the SEM imaging;

Calculating said average physical area of the silver-stained particles *S_{SEM}* using the formula: ${S}_{SEM} = \frac{{\sum }_{i = 1}^{n} {a}_{i}}{n}$

Calculating the standard deviation of the physical area of the silver-stained particles σ using the formula: $σ = \sqrt{\frac{{\sum }_{i = 1}^{n} {\left({a}_{i}-{S}_{SEM}\right)}^{2}}{n - 1}} .$

Finally, the silver-stained particle counts corresponding to all target connected domains in the same binarized mask are accumulated to obtain the total number of silver-stained particles for the corresponding reaction microwell.

**S600:** After calculating the number of silver-stained particles in said binarized mask, the method further includes: converting the determined number of silver-stained particles into a concentration value of the nucleic acid sample to be tested, based on a pre-determined mapping relationship between the number of silver-stained particles and sample concentration.

The adhesion of reduced silver to gold nanoparticles after the silver staining enhancement reaction forms visible and stable silver-stained particle signals, which is the core requirement and foundation for quantitative analysis. By integrating Artificial Intelligence (AI) with gold nanoparticle labelling-silver staining technology, this embodiment compensates for the time-consuming nature of traditional silver staining methods and ultimately achieves precise quantitative detection for POCT applications.

In this embodiment, the YOLOv5 deep learning algorithm is employed to accurately identify each reaction microwell. The UNet++ deep learning algorithm is utilized to transform images into super-resolution to identify individual silver-stained particles, facilitating statistical counting.

YOLO Model: A single neural network specifically designed for real-time object detection. Its advantages include high speed (typically 0.1-0.4 seconds per image on a general CPU) and low memory requirements (approximately 6 MB).

UNet Model: A Convolutional Neural Network (CNN) specialized for medical image super-resolution and segmentation. Its advantages include ease of implementation, operation, and optimization, relatively high speed (approximately 1.8 seconds per image), and acceptable memory requirements (approximately 70 MB).

Regarding the quantitative analysis aspect of the AI algorithms, the qualitative accuracy of the model remains at 100%, while the quantitative accuracy can reach over 95%. Both data and algorithms can be further utilized to improve the model.

By utilizing gold nanoparticle labelling-silver staining enhancement to form directly observable hybridization signals, combined with artificial intelligence algorithm models for image interpretation and quantification, the expression levels of specific gene nucleic acids can be measured. This enables accurate assessment of disease severity, prediction of treatment outcomes, and detection of the emergence of drug-resistant genes. Such precise molecular quantitative results assist physicians in adjusting treatment plans according to individualized conditions, meeting specific patient needs and achieving better therapeutic outcomes

### Substrate and Probe Preparation:

Aldehyde-modified glass slides are selected as the substrate. Specific capture probes (5'-end amino-modified) are designed for pathogens A and B, as well as internal control genes. These are printed into a 21×21 microwell matrix using a non-contact spotter, with a designed microwell diameter of 80 µm. Based on the principle of specific hybridization of nucleic acid molecules, a series of probe molecules with known sequences are immobilized on a micro-processed solid support (such as a glass slide or silicon wafer), enabling these probes to specifically hybridize with labelled sample nucleic acids.

### Hybridization Process:

The target sample nucleic acids are mixed with universal detection probes labelled with 10 nm gold nanoparticles at the 3'-end. A 20 µL volume of the mixture is applied dropwise to the chip surface and incubated at 45-75°C for 1-45 minutes. During hybridization, complementary sample nucleic acids bind to the corresponding probe sites; the immobilized hybridization probes on the chip first bind with the single-stranded targets, followed by the binding of the detection probes to the hybridized structure. If the target is present in the sample, a "solid-phase capture probe-target-gold-labelled detection probe" sandwich complex is formed (as shown in (3) of FIG. 1). Sample nucleic acids may be pre-amplified via symmetric PCR to introduce universal sequences, thereby enhancing specificity.

Positive internal control probes (targeting housekeeping genes) and negative control probes are arranged within the chip array to monitor hybridization efficiency and silver staining background noise, ensuring the reliability of the baseline for subsequent AI quantification.

The detection probes are labelled with gold nanoparticles, which subsequently undergo a colour development reaction with silver staining reagents to increase the volume of the gold nanoparticles for signal recognition. After hybridization, the chip is washed, and a silver staining enhancer-prepared by mixing equal volumes of a silver ion solution and a hydroquinone solution-is added. The chip is incubated at 15-60°C for 1-20 minutes, growing the 10 nm gold particles into 0.1-1.5 µm black-grey silver-stained particles. By detecting the intensity of these gold-silver particle labels, the type and content of nucleic acid molecules in the sample can be analysed qualitatively or quantitatively. The silver enhancement technology can increase the volume of the gold nanoparticles to more than 100 times their original volume, forming silver-stained particles with a diameter of approximately 1000 nm.

Utilizing a 20x optical microscope equipped with a CCD camera (such as a portable optical microscope weighing no more than 1 kg), high-resolution images of the chip microwell array are acquired via progressive scanning (as shown in FIG. 3 and FIG. 4). The 441 small circles (21 rows by 21 columns) in FIG. 3 represent the chip microwells, which can support the simultaneous detection of 100 or more nucleic acid targets. The degree of silver staining in different microwells is displayed as varying grey levels in FIG. 3; a darker grey level (blacker) indicates larger sample particles.

The optical imaging device automatically locates the microwells using crosshair markers at the four corners of the chip microwell matrix and scans row-by-row from left to right and top to bottom. The imaging camera captures high-magnification photos of 6 microwells (2 rows × 3 columns) per movement (as shown in FIG. 4). As seen in FIG. 4, individual silver-stained particle dots are visible under this high-magnification; the quantity and size of these dots are analysed to perform quantitative analysis of the target amount.

In this embodiment, a cascaded AI architecture combining YOLO (localization) and UNet (segmentation) is employed to process the images:

### Phase 1: Microwell Localization

The YOLO (You Only Look Once) target detection network is utilized. Its training data consists of 20x high-resolution chip images collected at various silver staining intensities (from light grey to deep black), with manual annotation of microwell bounding boxes. The specific inference process of the YOLOv5 network is as follows: the image to be tested is input into the model, which outputs the centre coordinates and detection boxes for all microwells. OpenCV algorithms are then used to crop individual microwell images (as shown in FIG. 5) based on these boxes, followed by image equalization preprocessing to enhance contrast.

Since the detection targets exist only within the microwells (the circles in FIG. 4), the YOLOv5 convolutional neural network is used for its robust ability to reliably identify targets in complex backgrounds. It effectively identifies, locates, and extracts individual microwells. The YOLOv5 model size does not exceed 6 MB, with a processing speed of 0.1-0.4 seconds per image.

### Phase 2: Silver-Stained Particle Pixel Semantic Segmentation

The UNet semantic segmentation network is employed, which effectively captures the minute edge features of silver-stained particles via skip pathways. To resolve annotation difficulties caused by particle adhesion in optical microscopic images, this embodiment introduces Scanning Electron Microscope (SEM) images as the "gold standard": High-magnification optical images and SEM images (FIG. 7) are captured at the same chip location.

Independent physical positions of silver-stained particles are clearly identified on the SEM images; The SEM and optical images are registered, and pixel-level annotation is performed on the corresponding positions of the optical image to generate high-precision training labels. The UNet network outputs a probability map of the same dimensions as the input, which is thresholded to generate a binarized mask (FIG. 6), where white regions represent silver-stained particle coverage areas, referred to as connected domains.

As seen in FIG. 5, individual silver-stained particles form pixel clusters of varying grey levels and sizes in optical imaging. This phase utilizes the UNet++ convolutional neural network to segment the pixels of a single microwell image. Compared to simpler algorithms like extreme value methods, UNet can distinguish not only grey levels but also complex graphical features such as shape and texture, ensuring highly reliable identification-a key factor for sample counting. The UNet++ model size does not exceed 70 MB, with a processing speed of 1.8 seconds per image.

The next step is to derive the actual number of silver-stained particles from the binarized mask by determining the particle count corresponding to the white spots in the binary image output by UNet++. OpenCV library functions are used to detect whether these white spots form connected pixel clusters, each serving as a potential silver-stained particle site. Because of the optical diffraction limit and the three-dimensional stacking of particles, a simple "point counting" method fails in high-density regions. To accurately calculate the particle count, this embodiment establishes a quantitative relationship between the physical area of the particles (measured via SEM) and their pixel area in the corresponding microscopic images.

Since individual particles are clearly distinguishable under SEM (as shown in FIG. 7), manual counting of the actual particles in these images serves as the ground truth (benchmark) for the calculations derived from the optical images (FIG. 5). To achieve this: A series of SEM images from silver-stained chips are manually counted. The physical areas of individual particles are measured to calculate the average physical area and the standard deviation. Simultaneously, the corresponding "dark spots" in the optical microscopic images (FIG. 5) are manually labelled to determine the number of pixels they occupy. Observations reveal that silver-stained particles appear significantly larger in optical images than their true physical size. Specifically, the average area occupied in the optical image is approximately 2.5 times the actual physical area measured in the SEM image. Thus, the pseudo-magnification ratio under optical imaging is determined to be 2.5.

By observing the relationship between the number of silver-stained particles in SEM images and optical microscopic images, the average pixel area occupied by a silver-stained particle in an optical image is estimated using the following formula. Experimental results indicate that the particle count estimated by this formula closely matches the results of manual counting from SEM images.

This embodiment proposes a statistical-based conversion model: ${A}_{avg} = {S}_{SEM} \times {R}_{exp} \times {R}_{rel}^{2}$ where *A_{avg}* represents the average pixel area of a single silver-stained particle in the microscopic image; *S_{SEM}* represents the actually measured average physical area of the silver-stained particles; *Rₑₓₚ* represents the pseudo-magnification ratio under optical imaging; and ${R}_{rel}^{2}$ represents the proportional coefficient correlating the pixel area of the reaction microwell in the microscopic image with its physical area, calculated as: ${R}_{rel}^{2} = {\left[\frac{Microwell diameter \left(pixels\right)}{Microwell diameter \left(μm\right)}\right]}^{2}$

In this embodiment, the average physical area of a silver-stained particle within a single reaction microwell was calculated via SEM to be 0.15*µm*², with a physical area standard deviation of 0.1*µm*². The pseudo-magnification ratio under optical imaging was measured at 2.5, the microwell diameter was 80µm, and the pixel count for the microwell diameter in the microscopic image was 400 pixels. Substituting these values into the formula and rounding, *A_{avg}* = 9.38(pixels²); that is, one silver-stained particle corresponds to 9.38 pixels in the optical microscopic image.

To accommodate fluctuations in the actual physical area of silver-stained particles, this embodiment empirically counts fluctuations within one standard deviation as a single particle. Experiments show that the lower limit of fluctuation is defined by one standard deviation of the physical area measured by SEM, and the upper limit is defined by 1.5 standard deviations (where *k* = 1.5 is the fluctuation coefficient). Thus, the fluctuation range of the pixel area occupied by a single silver-stained particle is defined by the following inequality: ${A}_{avg} - {A}_{avg} \times \left(\frac{σ}{{S}_{SEM}}\right) \leq A ′ \leq {A}_{avg} + 1.5 \times {A}_{avg} \times \left(\frac{σ}{{S}_{SEM}}\right)$ where A' represents the optical pixel area range of a single silver-stained particle; *σ* represents the standard deviation of the physical area of the silver-stained particles, *S_{SEM}* represents the average physical area of the silver-stained particles. Substituting the specific data yields the range: 3.13 ≤ *A'* ≤ 18.76.

Therefore, after detecting the connected domains in the mask image using OpenCV library functions, the pixel area *A* of each domain is determined. If the pixel area *A* < 3.13, the white spot pixel cluster is regarded as noise and ignored, and the silver-stained particle count for that target connected domain is determined to be 0. If the pixel area is 3.13 ≤ *A* ≤ 18.76, the silver-stained particle count for that target connected domain is determined to be 1. If the pixel area A > 18.76, it is considered to be multiple overlapping or adhering silver-stained particles; in this case, the particle quantity is estimated by dividing the pixel area of the cluster by the average pixel area of a single silver-stained particle (*A_{avg}*), and if the result is not an integer, it is rounded to the nearest whole number. By accumulating the silver-stained particle counts of all target connected domains within the same binarized mask, the total number of silver-stained particles for the corresponding reaction microwell is obtained. Final experiments demonstrate that the above counting results achieve a 93 ± 6% correlation with manual counting results.

After obtaining the accumulated total of silver-stained particle counts from all target connected domains in the binarized mask, the determined number of silver-stained particles is converted into a concentration value of the nucleic acid sample to be tested, based on a pre-determined mapping relationship between the number of silver-stained particles and sample concentration. This mapping relationship can be established by performing hybridization and silver staining reactions on samples of known concentrations, manually counting the number of silver-stained particles under SEM, and obtaining multiple sets of particle count-concentration data through repeated trials. A curve representing the relationship between the number of silver-stained particles and sample concentration is then generated via a fitting algorithm and stored in the multi-target quantitative analysis system. Once the number of silver-stained particles is calculated, the system calls this curve to determine the corresponding concentration.

To verify the effectiveness of the multi-target quantitative analysis method based on gold nanoparticle labelling-silver staining imaging and artificial intelligence-assisted biological image recognition of the present invention, the following comparative experiment was designed:
Samples: Gradient-diluted Cytomegalovirus (CMV) plasmid DNA (10² to 10⁷copies/mL) were used.

Methods: The traditional optical density method (OD value), manual counting, and the quantitative analysis method of the present invention were respectively employed to determine the number of silver-stained particles.

### Experimental Results:

In the low-concentration range (<10⁴copies/mL): All three methods performed well.

In the high-concentration range (>10⁵copies/mL): The traditional optical density method (i.e., directly measuring the greyscale value of the microwell) exhibited significant signal saturation (plateau phase) and failed to distinguish between high-concentration samples.

Performance of the Invention: Benefiting from the mathematical separation of stacked particles, the quantitative analysis method of the present invention maintained a strong response in high-concentration ranges at the 10⁶IU/mL or even 10⁷IU/mL levels. Compared to the benchmark manual electron microscopy counting, the accuracy of the present method reached 93 ± 6%, while the processing time was reduced from several hours (manual method) to under 30 seconds.

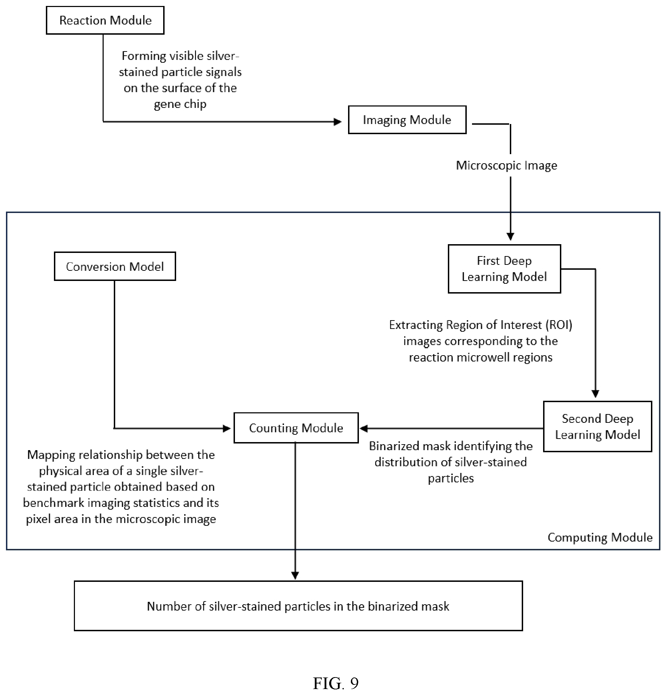

In an embodiment of the present invention, there is provided a multi-target quantitative analysis system based on gold nanoparticle labelling-silver staining imaging and artificial intelligence-assisted biological image recognition. As shown in FIG. 9, the target quantitative analysis system comprises the following modules: a reaction module, configured to carry a gene chip and cause it to perform a hybridization reaction with a nucleic acid sample to be tested, utilize gold nanoparticle-labelled detection probes to bind with target nucleic acids, and perform a silver staining enhancement colour development reaction, thereby forming visible silver-stained particle signals on the surface of said gene chip; an imaging module, equipped with an optical lens group and an image sensor, said imaging module being configured to capture microscopic images of said gene chip after the reaction; and a computing module, equipped with a processor and a memory, said memory storing a computer program which, when executed by said processor, implements the following steps:
utilizing a first deep learning model to perform target detection on said microscopic images to identify reaction microwell regions of the gene chip and extracting Region of Interest (ROI) images corresponding to said reaction microwell regions; utilizing a second deep learning model to perform pixel-level resolution recognition and semantic segmentation on said ROI images, and generating a binarized mask to identify the distribution of silver-stained particles;
and calculating, by a counting module based on a pre-constructed conversion model, the number of silver-stained particles in said binarized mask, wherein the construction of said conversion model is based on a mapping relationship between the physical area of a single silver-stained particle obtained from benchmark imaging statistics and its pixel area in the microscopic image.

In an embodiment of the present invention, the computing module integrates the YOLO and UNet algorithms, with a total memory requirement not exceeding 80 MB. The computing module has pre-stored therein mapping relationships between the number of silver-stained particles and sample concentrations for different pathogens or genetic targets; said processor is further configured to convert the calculated number of silver-stained particles into a concentration value of said nucleic acid sample to be tested.

The multi-target quantitative analysis system further comprises a quantitative analysis result output module, which is configured to generate a detection report based on the calculation results of the number of silver-stained particles or the matching results of the concentration values. This system is applicable to pathogen detection, gene mutation analysis, or dynamic disease monitoring.

According to yet another aspect of the present invention, there is provided a computer-readable storage medium storing a computer program which, when executed by a processor, implements the multi-target quantitative analysis method as described above.

The multi-target quantitative analysis system and computer-readable storage medium provided in this embodiment belong to the same inventive concept as the multi-target quantitative analysis method provided in the previous embodiments. The entire content of the method embodiments is hereby incorporated into the system and storage medium embodiments by reference and will not be repeated.

It should be noted that, herein, relational terms such as "first" and "second" are used only to distinguish one entity or operation from another, without necessarily requiring or implying any such actual relationship or order between these entities or operations. Moreover, the terms "comprising," "including," or any other variation thereof are intended to cover non-exclusive inclusion, such that a process, method, article, or device comprising a series of elements includes not only those elements but also other elements not explicitly listed, or elements inherent to such a process, method, article, or device. Without further limitation, an element defined by the phrase "comprising a..." does not exclude the presence of additional identical elements in the process, method, article, or device comprising said element.

The above are merely specific embodiments of the present application. It should be pointed out that for those of ordinary skill in the art, several improvements and refinements can be made without departing from the principles of the present application, and these improvements and refinements should also be regarded as falling within the scope of protection of the present application.

## Claims

1. A multi-target quantitative analysis method based on gold nanoparticle labelling-silver staining imaging and artificial intelligence-assisted biological image recognition, comprising:
contacting a nucleic acid sample to be tested with a gene chip to perform a hybridization reaction, utilizing gold nanoparticle-labelled detection probes to bind with target nucleic acids,
and performing a silver staining enhancement reaction to form visible silver-stained particle signals on the surface of said gene chip;
capturing microscopic images of the gene chip after the reaction using an optical imaging device;
performing target detection on said microscopic images using a first deep learning model to identify reaction microwell regions of the gene chip and extracting Region of Interest (ROI) images corresponding to said reaction microwell regions;
performing pixel-level resolution recognition and semantic segmentation on said ROI images using a second deep learning model, and generating a binarized mask to identify the distribution of silver-stained particles; and
calculating the number of silver-stained particles in said binarized mask based on a pre-constructed conversion model, wherein the construction of said conversion model is based on a mapping relationship between the physical area of a single silver-stained particle obtained from benchmark imaging statistics and its pixel area in the microscopic image.

2. The multi-target quantitative analysis method according to claim 1, wherein said first deep learning model is a target detection network selected from YOLO or SSD, and said second deep learning model is a semantic segmentation network selected from UNet or SegNet.

3. The multi-target quantitative analysis method according to claim 1, wherein said first deep learning model is obtained through training by:
obtaining microscopic images at different positions and/or under different reaction intensities, using an annotation tool to draw bounding boxes for reaction microwell regions in each microscopic image as labels, and partitioning said images into a training set, a validation set, and a test set according to a specific ratio;
inputting training images from the training set and corresponding labels into a YOLO model to calculate a loss value between network predicted values and the labels; utilizing a backpropagation algorithm to calculate gradients of a loss function relative to weights of each layer of the network, and optimizing weight parameters of the network using a gradient descent method;
iterating the cycle until losses of the YOLO model on both the training set and the validation set converge to a preset loss threshold; and
evaluating generalization performance of the YOLO model after completion of the iterations using the test set; if the evaluation is passed, the training is completed; otherwise, diagnosing performance differences of the model across the training set, the validation set, and the test set, and returning to a new round of cyclic training based on diagnostic results.

4. The multi-target quantitative analysis method according to claim 1, wherein said second deep learning model is obtained through training by:
obtaining ROI images targeting reaction microwells, using an annotation tool to outline edges of silver-stained particles in each ROI image, and generating a binarized mask label map corresponding to said ROI image, wherein pixel values of an inner region of the outlined edges are set to 1 and pixel values of remaining regions are set to 0;
scaling said ROI images and binarized mask label maps to a designated size adapted for UNet down sampling, and normalizing pixel values of said ROI images from [0, 255] to [0, 1] to obtain standardized sample images;
configuring a final layer of the UNet network to use a 1×1 convolution kernel and a Sigmoid activation function to output a probability map of each pixel belonging to a silver-stained particle; and
selecting a Dice Loss function and a Binary Cross-Entropy Loss function to calculate a weighted loss during iterative training of the model, and utilizing an Adam optimizer to minimize the loss to update network weights until performance of the network model on an independent validation set converges.

5. The multi-target quantitative analysis method according to claim 1, wherein training samples are obtained during the training process of said second deep learning model by:
collecting optical microscopic images and Scanning Electron Microscope (SEM) images for a same position region of a same chip;
performing spatial registration between said SEM images and the optical microscopic images; and
performing pixel-level annotation on said optical microscopic images by using physical particles identified in said SEM images as ground truth, to obtain a binarized mask label map.

6. The multi-target quantitative analysis method according to claim 1, wherein said gene chip comprises an aldehyde-modified solid-phase substrate and specific capture detection probes spotted on the surface of said solid-phase substrate;
said silver staining enhancement reaction comprises reducing silver ions under the catalysis of gold nanoparticles, such that the reduced silver is deposited to encapsulate the detection probes after the hybridization reaction.

7. The multi-target quantitative analysis method according to claim 1, wherein said optical imaging device is a bright-field optical microscope or a scanner based on a CMOS or CCD sensor;
said microscopic images collected by the optical imaging device are greyscale images or RGB colour images.

8. The multi-target quantitative analysis method according to claim 1, wherein after calculating the number of silver-stained particles in said binarized mask, the method further comprises:
converting the determined number of silver-stained particles into a concentration value of said nucleic acid sample to be tested, based on a pre-determined mapping relationship between the number of silver-stained particles and sample concentration.

9. The multi-target quantitative analysis method according to claim 1, **characterized in that** the number of silver-stained particles in said binarized mask is calculated by:
defining pixel clusters of silver-stained particles in said binarized mask to form a plurality of target connected domains, and presetting a pixel area lower limit *A_{low}* and a pixel area upper limit *A_{high}* consistent with growth characteristics of the silver-stained particles;
traversing each target connected domain in said binarized mask by:
determining a pixel area *A* of each target connected domain;
determining that a silver-stained particle count corresponding to the target connected domain is 0, if *A < A_{low}*;
determining that the silver-stained particle count corresponding to the target connected domain is 1, if *A_{low}* ≤ *A* ≤ *A_{hig} ;*
determining that the silver-stained particle count corresponding to the target connected domain is $Round \left(\frac{A}{{A}_{avg}}\right)$, if *A > A_{high},* wherein *Round*( ) is a rounding function, and *A_{avg}* is an average pixel area of a single silver-stained particle in the microscopic image determined based on said conversion model; and
accumulating the silver-stained particle counts corresponding to all target connected domains in a same binarized mask to obtain the number of silver-stained particles for the corresponding reaction microwell.

10. The multi-target quantitative analysis method according to claim 9, **characterized in that** said conversion model is as follows: ${A}_{avg} = {S}_{SEM} \times {R}_{exp} \times {R}_{rel}^{2}$ wherein:
*A_{avg}* represents the average pixel area of a single silver-stained particle in the microscopic image;
*S_{SEM}* represents the actually measured average physical area of the silver-stained particles; *Rₑₓₚ* represents a pseudo-magnification ratio under optical imaging; and
${R}_{rel}^{2}$ represents a proportional coefficient correlating the pixel area of the reaction microwell in the microscopic image with its physical area, the calculation formula of which is: ${R}_{rel}^{2} = {\left[\frac{microwell diameter \left(pixels\right)}{microwell diameter \left(μm\right)}\right]}^{2} .$

11. The multi-target quantitative analysis method according to claim 9, **characterized in that** said pixel area lower limit*A_{low}* and pixel area upper limit *A_{high}* are set based on the average pixel area *A_{avg}* of a single silver-stained particle in the microscopic image: ${A}_{low} = {A}_{avg} - {A}_{avg} \times \left(\frac{σ}{{S}_{SEM}}\right) ;$ ${A}_{high} = {A}_{avg} + k \times {A}_{avg} \times \left(\frac{σ}{{S}_{SEM}}\right) ;$ wherein *σ* represents the standard deviation of the physical area of the silver-stained particles, *S_{SEM}* represents the average physical area of the silver-stained particles, and *k* is a fluctuation coefficient with a value ranging from 1.1 to 1.8.

12. The multi-target quantitative analysis method according to claim 10, **characterized in that** said average physical area of the silver-stained particles is determined by:
imaging the gene chip or the reaction microwells after the silver staining enhancement reaction using a Scanning Electron Microscope (SEM), and measuring physical areas of individual silver-stained particles as [*a*₁, *a*₂, *a*₃, ..., *aₙ*] , wherein *n* is the number of silver-stained particles in the SEM imaging;
calculating said average physical area of the silver-stained particles using the formula: ${S}_{SEM} = \frac{{\sum }_{i = 1}^{n} {a}_{i}}{n}$ ;
and/or, calculating the standard deviation of the physical area of the silver-stained particles σ using the formula: $σ = \sqrt{\frac{{\sum }_{i = 1}^{n} {\left({a}_{i}-{S}_{SEM}\right)}^{2}}{n - 1}}$.

13. A multi-target quantitative analysis system based on gold nanoparticle labelling-silver staining imaging and artificial intelligence-assisted biological image recognition, comprising the following modules:
a reaction module, configured to carry a gene chip and cause it to perform a hybridization reaction with a nucleic acid sample to be tested, utilize gold nanoparticle-labelled detection probes to bind with target nucleic acids, and perform a silver staining enhancement reaction to form visible silver-stained particle signals on the surface of said gene chip;
an imaging module, equipped with an optical lens group and an image sensor, said imaging module being configured to capture microscopic images of said gene chip after the reaction; and
a computing module, equipped with a processor and a memory, said memory storing a computer program which, when executed by said processor, implements the following steps:
performing target detection on said microscopic images using a first deep learning model to identify reaction microwell regions of the gene chip and extracting Region of Interest (ROI) images corresponding to said reaction microwell regions;
performing pixel-level resolution recognition and semantic segmentation on said ROI images using a second deep learning model, and generating a binarized mask to identify the distribution of silver-stained particles; and
calculating, by a counting module based on a pre-constructed conversion model, the number of silver-stained particles in said binarized mask, wherein the construction of said conversion model is based on a mapping relationship between the physical area of a single silver-stained particle obtained from benchmark imaging statistics and its pixel area in the microscopic image.

14. The multi-target quantitative analysis system according to claim 13, wherein said computing module has pre-stored therein mapping relationships between the number of silver-stained particles and sample concentrations for different pathogens or genetic targets;
said processor is further configured to convert the calculated number of silver-stained particles into a concentration value of said nucleic acid sample to be tested.

15. A non-transitory computer-readable storage medium storing a computer program, wherein when said computer program is executed by a processor, it implements the multi-target quantitative analysis method according to claim 1.
